# EUROPÄISCHE PATENTSCHRIFT

(11) **EP 3 463 799 B1**
(45) Veröffentlichungstag und Bekanntmachung des Hinweises auf die Patenterteilung: **13.09.2023**
(21) Anmeldenummer: 16778189.7
(22) Anmeldetag: 27.05.2016
(51) Int. Cl.: B29C 48/05, B29C 48/68, B29C 64/321, B29C 64/343, B29C 64/209, B29C 48/53, B29C 48/505, B29C 48/02, B29C 48/80, B29C 48/30, B29C 48/875

(54) **ANLAGE ZUR ADDITIVEN FERTIGUNG VON METALLTEILEN**
SYSTEM FOR THE ADDITIVE MANUFACTURE OF METAL PARTS
INSTALLATION POUR LA FABRICATION ADDITIVE DE PIÈCES MÉTALLIQUES

(43) Veröffentlichungstag der Anmeldung: 10.04.2019
(73) Patentinhaber: AIM3D GmbH, 18069 Rostock (DE)
(72) Erfinder: LIEBERWIRTH, Clemens, 18106 Rostock (DE); SEITZ, Hermann, 18055 Rostock (DE)
(74) Vertreter: Maikowski & Ninnemann Patentanwälte Partnerschaft mbB
(86) Internationale Anmeldenummer: PCT/DE2016/000228
(87) Internationale Veröffentlichungsnummer: WO 2017/202398

(56) Entgegenhaltungen:
- EP-A1- 2 957 420
- WO-A2-2013/030226
- DD-A1- 104 254
- DE-A1- 10 058 143
- DE-B1- 2 754 877
- DE-U1-202005 018 685
- KR-A- 20160 107 769
- US-A- 5 273 356
- US-A1- 2009 263 582
- US-A1- 2015 321 419

## Beschreibung

Die Erfindung betrifft eine Anlage zur additiven Fertigung metallischer Bauteile mittels eines Extrusionsverfahrens, das sogenannte Composite-Extrusion-Modeling.

Die additive Fertigung von Metallteilen stellt immer noch eine kostspielige und komplexe Alternative zur herkömmlichen Fertigung (Urformen, Spanen etc.) dar. Dennoch findet sie in größeren Betrieben der Branchen Luft- und Raumfahrt, Automobilindustrie und Medizintechnik Anwendung. Dies liegt vor allem daran, dass die additive Fertigung eine nie dagewesene Konstruktionsfreiheit ermöglicht:
- komplexe Formen mit Hinterschneidungen,
- biologische Strukturen bis hin zu eins zu eins Kopien menschlicher Knochenstrukturen,
- Leichtbauteile mit Gitter oder Wabenstrukturen, thermisch beanspruchte, strömungsführende Teile (z.B. Raketentriebwerksteile).

Im Bereich der additiven Fertigungsverfahren haben sich in den vergangenen 30 Jahre verschiedene Verfahren etabliert, die vor allem nach der Art und Weise der Schichtgenerierung in Verbindung mit dem Ausgangsmaterial zu unterscheiden sind:
das Aushärten eines UV-empfindlichen Harzes,
das Verfestigen eines Pulverbettes durch Bindemittel,
das Aufschmelzen und Erstarren eines Pulverbettes durch Laser- oder Elektronenstrahlen,
das Aufschmelzen und Erstarren eines Kunststoffdrahtes durch eine beheizte Düse.

Die wichtigsten additiven Fertigungsverfahren sind die Stereolithographie(STL), das 3D-Printing (3DP), das Selektive Lasersintern (SLS), das Elektronenstrahl-Schmelzen (EBM) und das Fused Deposition Modeling (FDM).

Die Stereolithographie wurde erstmals in der US 45 75 330 A offenbart. Bei diesem Verfahren wird eine Bauplattform um eine bestimmte Schichtdicke in ein Bad aus flüssigem UV-aushärtbarem Harz getaucht. Mittels eines UV-Lasers wird die erste Schicht des Bauteils auf der Bauplattform verfestigt. Die Schritte des Absenkens und des Verfestigens des Bauteils werden im Nachfolgenden wiederholt und so "wächst" das Bauteil von unten nach oben auf der Bauplattform. Das Verfahren weist sehr gute Detaillierungen und Oberflächenqualitäten auf, ist aufgrund der verwendeten Harze aber hauptsächlich für Anschauungsmodelle und Muster geeignet.

Das eigentliche 3D-Printing beschreibt ein Verfahren, bei dem eine Schicht eines pulverförmigen Ausgangsmaterials (Polymere, Keramik, Metall, Sand) mit einem Rakel auf einer Bauplattform aufgetragen wird. Anschließend verfährt ein Druckkopf, ähnlich dem eines Tintenstrahldruckers über dem Pulver und sprüht selektiv ein Bindemittel in das Pulver um die Kontur und Füllung des Bauteils zu verfestigen. Diese beiden Vorgänge wiederholen sich, bis das Bauteil fertiggestellt ist.

Weitere pulververarbeitende Verfahren sind die Sinter- und Schmelzverfahren, die entweder mit einem Laser (SLS, SLM) die Konturen der Bauteile im Pulverbett verfestigen, oder aber mit einem Elektronenstrahl (EBM). Der Schichtauftrag des metallischen Pulvers erfolgt dabei ähnlich wie beim 3D-Printing in einem abgeschlossenen Bauraum, der vakuumiert wird und unter Schutzgas steht. Die hochenergetischen Strahlen werden entweder über Spiegelmechaniken oder durch Elektromagneten auf dem Pulverbett entlangbewegt. Dabei wird das Pulverbett lokal aufgeschmolzen und verfestigt anschließend wieder. Beim SLM- und EBM Verfahren ist der Energieeintrag dabei so hoch, dass sehr dichte Bauteile mit bis zu 99% der Dichte des Vollmaterials entstehen. Beim SLS-Verfahren werden die einzelnen Pulverpartikel lediglich versintert, was zu einem poröseren Bauteil führt.

Die Bauteile der Schmelzverfahren weisen sehr gute mechanische Eigenschaften auf, die Verfahren zählen jedoch bedingt durch die hohen Anschaffungskosten (Laser und Spiegelmechanik) und Materialpreise und die wartungsintensive Technik zu den teuersten Verfahren. Zudem sind die Anlagen oft bis zu 200x größer als der eigentliche Bauraum und bei der Arbeit mit Metallpulvern besteht grundsätzlich die Gefahr von Staubexplosionen und Metallbränden.

Ein weiteres thermisches Verfahren ist das Fused Deposition Modeling Verfahren. Es wird in der US 51 21 329 A beschrieben. Bei diesem Verfahren wird ein thermoplastischer Kunststoffdraht durch eine beheizte Düse gepresst und bildet durch Bewegen der Bauplattform und/oder des Extruders die einzelnen Schichten des Bauteils auf der Bauplattform ab. Die zweite und alle weiteren Schichten werden dabei jeweils auf die darunter liegende Struktur gedruckt.. Im Gegensatz zu den anderen Verfahren entstehen Bauteile hier freigeformt und sind nicht von unverfestigtem Material umgeben.

Die Verfahren, die zur Fertigung von Metall- und Keramikteilen geeignet sind, arbeiten mit Metallpulvern sind teuer und erfordern besondere Schutzmaßnahmen. Es ist darauf zu achten, dass es zu keinem Zeitpunkt zu einer Verblasung von Pulver und damit zu einer Staubexplosion und einem Metallbrand kommen darf. Der Bauraum muss nach einem Druckprozess von losem Pulver befreit werden und auch am Bauteil selbst haftet noch eine Pulverkruste, die mit zusätzlichen Geräten entfernt werden muss. Bedingt durch den Schichtaufbau ist der gesamte Bauraum um das eigentliche Bauteil und auch Hohlstrukturen im Bauteil mit losem Pulver gefüllt.

Es gibt bereits Ansätze, neue additive Fertigungsverfahren für die Verarbeitung von metallischen oder keramischen Bauteilen zu etablieren.

In der WO 2000 051 809 A1 wird das sogenannte Paste-Polarisation-Verfahren offenbart. Dieses ähnelt in seiner Arbeitsweise der Stereolithographie, mit dem Unterschied, dass als Ausgangsmaterial kein flüssiges UV-sensibles Harz sondern eine Paste verwendet wird. Die Paste besteht aus 35-60% Metall- oder Keramikpartikeln und einem UV- sensiblen Harz. Das Harz dient als Bindemittel und sorgt für die Festigkeit des Bauteils nach dem Druckprozess. Das Verfahren wurde allerdings nicht kommerzialisiert.

Ein weiteres Hybrid-Verfahren, das die Erzeugung von Metallteilen mittels bekannter additiver Fertigungsverfahren ermöglicht, wird in der DE 10 2005 056 260 B4 beschrieben. Dabei wird das 3D-Printing-Verfahren eingesetzt, um Bindemittel in metallisches oder keramisches Pulver zu injizieren. Der Schichtaufbau erfolgt auf dieselbe Weise wie beim 3D-Printing. Nach dem Druckprozess sorgt das ausgehärtete Bindemittel für die Festigkeit im sogenannten Grünteil, durch anschließendes Ausbrennen des Binders in einem Ofen und Versinterung der Metall- oder Keramikpartikel entsteht ein festes Metallteil, das jedoch aufgrund des hohen Binderanteils eine geringe Dichte aufweist. Das Verfahren lässt sich ebenfalls zur Erzeugung von Sandformen und Gusskernen verwenden. Das Verfahren hat weiterhin den Nachteil der hohen Anschaffungskosten, welche eine breitere Verwendung hemmen.

Die genannten Verfahren haben zudem den Nachteil, dass keine geschlossenen Hohlstrukturen erzeugt werden können, und nicht verfestigtes Material aus dem Bauteilinneren und der Umgebung des Bauteils manuell entfernt werden muss. Des Weiteren ist bei der Fertigung von Metall- und Keramikteilen mittels 3DP weiterhin der anspruchsvolle Umgang mit dem pulverförmigen Ausgangsmaterial zu beachten. Ein weiteres Verfahren zur Herstellung von Formteilen aus, in einem Bindemittel gebundenen Metall- und/oder Keramikpartikeln ist das Pulverspritzgießen. Dabei werden mittels Spritzgießen Formteile aus pulverhaltigem Material hergestellt. Ein sogenannter Feedstock wird in einer Plastifiziereinheit mit einer Schnecke durch Wärmeleitung von außen her über am Plastifizierzylinder angebrachte Heizbänder sowie aufgrund Dissipation in der Schmelze beim Durchmischen im Schneckenzylinder aufgeschmolzen. Der Feedstock besteht aus einem definierten Volumenanteil Pulver und einem Volumenanteil Binderkomponente. Das Verhältnis von Pulver- zu Binderanteil beeinflusst die Fließeigenschaften und bestimmt die Schwindung des Bauteils beim Sintern.

Die DE 10 2007 019 100 A1 betrifft ein Verfahren zum Spritzgießen einer spritzgießfähigen Masse in einer Spritzgießmaschine, die eine mit einer Schnecke versehene Plastifiziereinheit, eine Einspritzeinheit, eine Maschinensteuerung und ein Werkzeug mit einer Kavität aufweist, wobei in die Kavität spritzgießfähige Masse eingespritzt werden kann und wobei die spritzgießfähigen Masse aus mindestens einer Pulverkomponente und mindestens einer Binderkomponente besteht. Des Weiteren betrifft die Erfindung eine Spritzgießmaschine. Die Binderkomponente wird im Plastifizierzylinder schmelzflüssig, während die Pulverkomponente im festen Aggregatzustand bleibt. Nach dem Spritzgießprozess werden die gespritzten Teile gesintert. Der Feedstock wird vor der Verarbeitung auf der Spritzgießmaschine in Compoundiereinrichtungen homogenisiert.

Der Nachteil bei diesem Verfahren ist der Einsatz von Formwerkzeugen, in das Feedstock- Material eingespritzt wird und dort auch aushärtet. Mit diesem Verfahren sind keine freiformbaren Bauteile zu fertigen, da es sich hierbei um kein additives Fertigungsverfahren handelt.

Weiterhin wird in der Keramischen Zeitschrift 04/2014 Seite 235 ein FDM- Verfahren zur Herstellung von Grünlingen aus keramischen Werkstoffen beschrieben, wobei eine Keramik- Masse in eine Injektionsspitze gefüllt und diese über x-, y- und z-Achsen verfahren wird, während der Kolben der Injektionsspritze die Masse aus der Düse der Spritze fördert. Hier wird kein Schmelzfaden sondern eine kalte plastische Masse über eine Düse extrudiert und abgelegt. Dieses Verfahren dient der Herstellung von Grünlingen aus Keramikmassen, aber nicht der Herstellung von Bauteilen. Dazu sind die Oberflächen zu uneben. Mit dem Verfahren können nur endkonturnahe Halbzeuge zur anschließenden Grün- oder Weißbearbeitung hergestellt werden.

Ln der JP 2000 144 205 A wird ein Herstellungsverfahren von dreidimensionalen Strukturen aus Metall- oder Keramikpulver beschrieben, wobei über einen Extruder das in einem thermoplastischen Harz gebundenen Pulver dreidimensional auf eine Bauplattform aufgetragen und nach Fertigstellung der Struktur diese entbindert wird. Hier ist keine technische Umsetzung vorgesehen, da die Verarbeitung von Standard-MIM Materialien in einem additiven Prozess gewisse technische Hürden mit sich bringt. Hier wird ein klassischer MIM-Extruder eingesetzt und das bewegliche Bett kann schlecht für den Prozess für größere Teile verwandt werden, da das Bauteil immer schwerer wird. Der Einsatz von Granulat ist für viel größere Anlagen gedacht, der klassische Dreizonen- Extruder arbeitet in der waagerechten und ist viel größer ausgelegt.

### In der DE 10 2012 217 182 A1 wird Verfahren zum Herstellen eines

Refraktärmetall- Bauteils beschrieben, wobei das Verfahren folgende Schritte aufweist
- Bereitstellen eines Ausgangsmaterials, welches ein Refraktärmetall-Pulver aus mindestens einem Refraktärmetall und/oder einer Verbindung davon sowie mindestens einen Binder aufweist, und
- Urformen des Ausgangsmaterials zu mindestens einem Grünkörper, wobei das Ausgangsmaterial ein Keramikpulver aufweist.

Das Refraktärmetaii-Bauteil ist mittels Extrudierens gefertigt, wobei das Ausgangsmaterial eine Extrusionsmasse darstellt.

Die DE 10 2011 005 929 A1 offenbart eine Trägerstruktur, insbesondere für eine Vorrichtung zum Herstellen eines Bauteils in einem Schichtbauverfahren, mit einer Oberfläche, wobei die Trägerstruktur in einer Hochrichtung, die im Wesentlichen senkrecht zur Oberfläche ausgerichtet ist, verschiebbar gelagert ist. Dabei umfasst die Trägerstruktur eine Mehrzahl einzelner Stempel, die jeweils in Hochrichtung verfahrbar sind. Die Erfindung bezieht sich weiterhin auf eine Vorrichtung mit einer solchen Trägerstruktur sowie auf ein Verfahren zum Herstellen von Bauteilen. Vorrichtung zum Herstellen eines Bauteils, insbesondere in einem Schichtbauverfahren besteht aus einem Behälter, der einen Bauraum zum Aufnehmen eines pulverförmigen Ausgangsmaterials umfasst, einer Strahlerzeugungseinrichtung zum Erzeugen eines Energiestrahls, mit der das pulverförmige Ausgangsmaterial zumindest zu einem Abschnitt einer Stützstruktur verfestigbar ist, wobei der Boden des Bauraums durch eine Trägerstruktur gebildet wird.

In der DE 10 2007 019 100 A1 wird ein Verfahren zum Spritzgießen einer spritzgießfähigen Masse in einer Spritzgieß- Plastifiziereinheit dargestellt, die eine Einspritzeinheit, eine Maschinensteuerung und ein Werkzeug mit einer Kavität aufweist, wobei in die Kavität spritzgießfähige Masse eingespritzt werden kann und wobei die spritzgießfähige Masse aus mindestens einer Pulverkomponente und mindestens einer Binderkomponente besteht. Um die Verarbeitung von pulverhaltiger Spritzgießmasse zu verbessern, sieht die Erfindung die Schritte vor: a) Ermittlung der Einspritzarbeit (WE); b) Ermittlung der Dosierarbeit (WD); c) bei Anstieg oder Abfall der gemäß Schritt a) ermittelten Einspritzarbeit (WE) aus einem Toleranzbereich hinaus und beim Verbleiben der gemäß Schritt b) ermittelten Dosierarbeit (WD) innerhalb eines Toleranzbereichs: Nichtveranlassen einer Maßnahme zur Beeinflussung der Mischungshomogenität der spritzgießfähigen Masse; d) bei Anstieg oder Abfall der gemäß Schritt a) ermittelten Einspritzarbeit (WE) aus einem Toleranzbereich hinaus und beim Anstieg oder Abfall der gemäß Schritt b) ermittelten Dosierarbeit (WD) aus einem Toleranzbereich hinaus: Veranlassen einer Maßnahme zur Beeinflussung der Mischungshomogenität der spritzgießfähigen Masse.

In einer vorhergehenden Erfindung des Anmelders mit dem Aktenzeichen DE 10 2014 018 081 wird eine Anlage zur additiven Fertigung von Metallteilen mittels eines Extrusionsverfahrens - Composite Extrusion Modeling (CEM) beschrieben, die aus einem oder mehreren Extruder, die starr an eine in x-,y-, oder z- Achse bewegbarer und an die Steuerung eines 3D-Druckers angeschlossenen Kinematik der Anlage zur Erzeugung der dreidimensionalen Bauteilstruktur frei wählbar montiert ist, besteht. Die Bewegungen des Extruders erfolgen über die x-, y- und z- Achse der Kinematik, wobei die Bauplattform unbeweglich oder über eine Kombination aus der Bewegung des Extruders mit der Bewegung der Bauplattform in den entsprechenden Achsen ausgeführt ist. Der Extruder besteht aus einem mechanischen Antrieb, einem beheizten Gehäuse und aus einer am beheizten Gehäuse befestigten auswechselbaren Düse, wobei das beheizte Gehäuse mit dem mechanischen Antrieb über geeignete Mittel zum Transport des Kompositmaterials vom mechanischen Antrieb zum beheizten Gehäuse versehen ist. Der mechanische Antrieb ist als Stopfschnecke oder als Zellrad oder als Antriebsräder ausgebildet.

Das Kompositmaterial in Form eines Granulats, grobkörnigen Pulvers oder Sticks wird mittels des mechanischen Antriebs in das beheizten Gehäuse gefördert, verdichtet und plastifiziert sowie durch eine auswechselbare Düse extrudiert. Die Bestückung des mechanischen Antriebes kann dabei entweder über eine Schüttung, durch eine Überdruckleitung oder eine entsprechende Dosiereinrichtung erfolgen. Die Ausführung des Extruders mit einem komplett beheizten Gehäuse bereitet aber bei der additiven Fertigung von metallischer Bauteilen im sogenannte Composite-Extrusion-Modeling Schwierigkeiten und das Verfahren mit dem Extruder, der in dieser beschriebenen Anlage eingesetzt wird, führt immer wieder zu Ausfällen der Anlage bei der Fertigung der metallischen Bauteile.

Die DE 199 43 738 C1 betrifft eine Extruderanlage zur Verarbeitung von Kautschukmischungen oder thermoplastischen Kunststoffen, die eine Fütterzone, eine Plastifizierzone und eine Druckaufbauzone umfaßt, mit einem Schneckenextruder und einem in Extrudierrichtung stromabwärts daran angeschlossenen Zahnradextruder, an den ein Extrudierwerkzeug anschließbar ist. Dabei ist der Schneckenextruder ein in seiner Baulänge verkürzter Extruder (Kurzextruder), der lediglich eine Fütterzone umfaßt, und dass der Zahnradextruder die Plastifizier- und Druckaufbauzone bildet. Die Dosiereinrichtung kann auch als eine Zellradschleuse ausgebildet sein.

In der DE 199 29 824 C2 wird Extruder zum Plastifizieren von thermoplastischen Medien beschrieben, der in einem Einlaufbereich mit einem Granulateinlauf (E) und im entgegengesetzten Ende mit einer Austrittsbohrung (A) versehen ist, mit einer motorisch angetriebenen Gewindespindel (S), die in einem Mantel (M) mit gegenläufigem Mantelgewinde (MG) angeordnet ist, wobei über einen Aufschmelzbereich der Spindellänge der längenspezifische freie Gesamtquerschnitt (GS + QM) des Spindelgewindes (SG) und des Mantelgewindes (MG) etwa konstant ist und der freie Spindelgewindequerschnitt (QS) sowie der freie Mantelgewindequerschnitt (QM) sich dort komplementär linear ändern.

Mit den aus dem Stand der Technik bekannten Lösungen ist es bisher nicht möglich, metallische, freiformbare Bauteile mit einer hohen Dichte oder geschlossene Hohlstrukturen aus Metall , geringer Schwindung und somit mit einer hohen Festigkeit mittels additiven thermoplastischen Verfahren, wie dem FDM- Verfahren zu fertigen. Hohe Anschaffungs- und Materialkosten, Wartungskosten, die Größe der Anlagen und die Komplexität der Verfahren stellen einen weiteren Nachteil der bisher offenbarten technischen Lösungen der additiven Fertigung dar. Weiterhin war es mit den bekannten technischen Lösungen nicht möglich freiformbare Bauteile mit FDM- Verfahren herzustellen, deren Ausgangsmaterial ein Kompositmaterial aus thermoplastischen Bindemittel und einem hohen Metallpartikelanteil, beispielsweise handelsüblichen Feedstock- Materialien ist. Weiterhin führen die aus dem Stand der Technik bekannten Anlagen immer wieder zu Ausfällen bei der Herstellung von metallischen Bauteilen mittels Composite-Extrusion-Modeling- Verfahren.

Vergleichbare Anlagen zur additiven Fertigung von Bauteilen sind in den Dokumenten DD 104 254 A1, DE 100 58 143 A1, US 2015/321419 A1, US 2009/263582 A1, DE 20 2005 018685 U1, WO 2013/030226 A2, EP 2 957 420 A1, DE 27 54 877 B1 und US 5 273 356 A beschrieben.

Aufgabe der Erfindung ist einen Extruder für eine Anlage zur Erzeugung von Metallteilen aus Kompositmaterial mit thermoplastischen Binder und Metallpartikel in Form von Granulat, grobkörnigem Pulver oder Sticks bereitzustellen. Dieser neue Extruder in Verbindung mit der Anlage gemäß DE 10 2014 018 081.6 soll durch deutlich niedrigere Kosten und ein besseres Verhältnis von Bauraum zu Anlagengröße auch für kleine und mittelständische Unternehmen attraktiv sein. Hierdurch kann die Art und Weise der Produktentwicklung und der Innovationsförderung im Gesamten verbessert werden. Bauteile sollen frei auf der Bauplattform erzeugt werden, wodurch keine manuelle Entfernung von ungebundenem Material bzw. Reinigung des Bauraumes erforderlich sein wird. Des Weiteren soll die Anlage nur Materialien in gebundener Form verarbeiten um die Gefahr einer Staubexplosion zu verhindern und die Notwendigkeit von Vakuum und Schutzgas während des Druckprozesses zu vermeiden.

Erfindungsgemäß wird die Aufgabe der Erfindung durch eine Anlage zur additiven Fertigung von Metallteilen mittels eines Extrusionsverfahrens - Composite Extrusion Modeling (CEM), mit den Merkmalen des Anspruchs 1 gelöst.

Die Anlage umfasst
- eine Bauplattform,
- eine dreidimensional verfahrbare Kinematik, und
- einen Extruder (7), der starr an die in x-,y-, oder z- Achse bewegbare und an die Steuerung eines 3D-Druckers angeschlossene Kinematik (18) der Anlage zur Erzeugung der dreidimensionalen Bauteilstruktur frei wählbar montiert ist.

Der Extruder (7) umfasst einen mechanischen Antrieb (1) für das zu extrudierende Kompositmaterial, und das Gehäuse (2) ist über geeignete Mittel zum Transport des Kompositmaterials mit dem mechanischen Antrieb (1) verbunden.

Die Bewegungen des Extruders (7) erfolgen über die x-, y- und z- Achse der Kinematik (18), wobei die Bauplattform (11) unbeweglich oder über eine Kombination aus der Bewegung des Extruders (7) mit der Bewegung der Bauplattform (11) in den entsprechenden Achsen ausgeführt ist.

Der Extruder (7) besteht aus einem Gehäuse (2) und einer am Gehäuse (2) angeordnete, auswechselbare Düse (3), wobei das Gehäuse (2) in eine Einzugszone (5), eine Trennzone (6), Plastifizierungs- und Homogenisierungszone (8) und eine Ausstoßzone (12) unterteilt ist, wobei
- die Einzugszone (5) mit einer aktiven Kühlung für das Kompositmaterial versehen ist, und das Material des Gehäuses (2) aus einem Material mit guter Wärmeleitfähigkeit besteht,
- die Trennzone( 6) die gekühlte Einzugszone (5) thermisch von der beheizten Plastifizierungszone (8) trennt und in der Trennzone (6) das Gehäuse (2) aus einem Material mit schlechter Wärmleitfähigkeit besteht,
- die Pazifizierungs- und Homogenisierungszone (8) mit einer aktiven Heizung (10) zur Plastifizierung des Kompositmaterials versehen ist und in der Plastizifizierungs- und Homogenisierungszone (8) das Gehäuse aus Material mit guter Wärmeleitfähigkeit besteht, und
- die Ausstoßzone (12) auf eine Schmelztemperatur des Kompositmaterials eingestellt ist und aus einer auswechselbaren Düse (3) aus einem abriebfesten Material (gehärteter Edelstahl) besteht, und über die Ausstoßzone (12) geschmolzene Formmasse in Fadenform zur additiven Fertigung eines Metallteils, gesteuert durch die Kinematik (18), auf die Bauteilplattform (11) auftragbar ist, wobei.
   a) das Gehäuse (2) in der Einzugszone (5) als Trichter (22) ausgeführt ist und in dem Gehäuse (2) eine Schnecke (4) angeordnet ist, die in der Einzugszone (5) und der Trennzone (6) einen geringeren Wellendurchmesser aufweist als in der Plastizifizierungs- und Homogenisierungszone (8), oder
   b) der mechanische Antrieb (1) als Zellrad (13) oder als Antriebsräder (14) ausgebildet ist.

Der Wellendurchmesser der Schnecke (4) ist in einer Ausführungsform konusförmig ausgebildet und steigt gleichmäßig von Zone (5) bis zum Ende der Zone (8) an.

In einer Auslegung der Erfindung besteht eine Welle der Schnecke (4) in der Trennzone (5) aus einem Material mit einer schlechten Wärmeleitfähigkeit.

In einer noch weiteren Auslegung der Erfindung besteht das Material der Trennzone (6) des Gehäuses (2) aus einem Kunststoff oder Keramik, beispielsweise aus einem Polyetheretherketon oder aus Polysultan und das Material der Einzugszone (5) und der Plastifizier- und Homogenisierungszone (8) aus Aluminium.

In einer weiteren Auslegung der Erfindung sind am mechanischen Antrieb (1) für das zu extrudiere Kompositmaterial eine Überdruckleitung (15) oder eine Dosiereinrichtung (16) zur Bestückung mit in fester Form vorliegendem Kompositmaterial in Form von thermoplastischem Bindemittel und Metallpartikeln angeordnet. Das geeignet Mittel zum Transport des Kompositmaterials vom mechanischen Antrieb (1) zum Gehäuse (2) kann in einer weiteren Auslegung der Erfindung als ein Schlauch ausgebildet sein.

Der Extruder (7) ist in der Einfuhrzone (5) mit .der Kühlung (9) für das Kompositmaterial, in der Plastifizierungs und Homogenisierungszone (8) mittels der Heizung (10) auf eine Temperatur zur Plastifizierung des Kompositmaterials und in der Ausstoßzone (12) auf Schmelztemperatur des Kompositmaterials eingestellt.

An der Kinematik (18) können ein oder mehrere Extruder angeordnet sein.

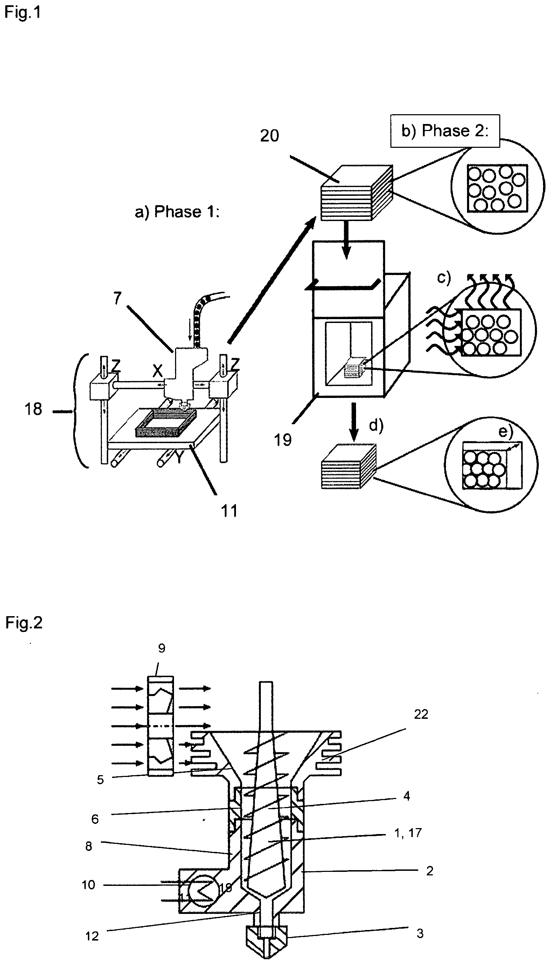

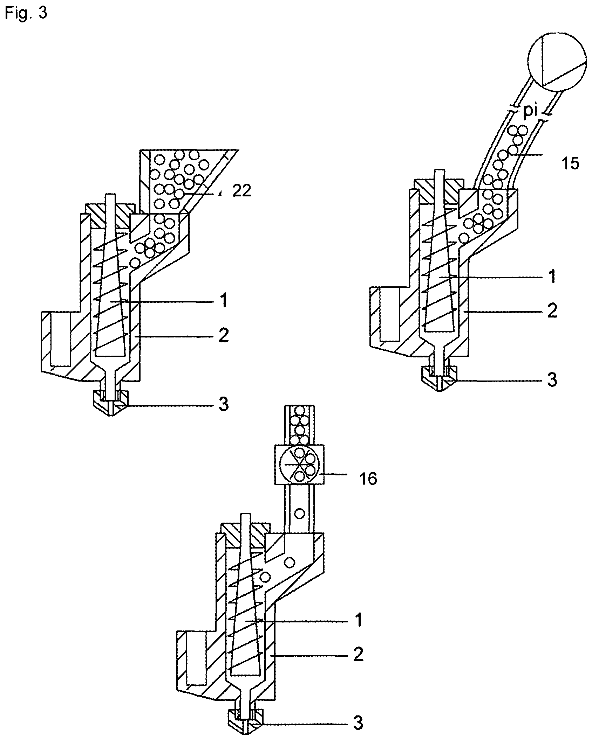

Die Erfindung wird nun anhand eines Beispiels näher erläutert, wobei die Fig. 1 eine schematische Darstellung der Anlage, die Fig. 2 eine Skizze des Aufbaus des Extruders (7), die Fig. 3 die Möglichkeiten der Befüllung des Extruders (7), die Fig. 4 den mechanischen Antrieb (1) als Zellrad (14) ausgebildet, die Fig. 5 den mechanischen Antrieb (1) als Antriebsräder ausgebildet (15) die Fig.6 eine Skizze eines Bauteils mit einer Stützstruktur darstellen. Dabei bedeuten
- 1: mechanischer Antrieb
- 2: Gehäuse, des Extruders (7)
- 3: Düse
- 4: Schnecke
- 5: Einzugszone
- 6: Trennzone
- 7: Extruder
- 8: Plastifizier- und Homogenisierungzone
- 9: Kühlung
- 10: Heizung
- 11: Bauplattform
- 12: Ausstoßzone
- 13: Zellrad
- 14: Antriebsräder
- ·15: Oberdruckleitung
- 16: Dosiereinrichtung
- 17: Stopfschnecke
- 18: Kinematik
- 19: Sinterofen
- 20: Grünteil
- 21: Sticks
- 22: Trichter
- 23: Stützstruktur

Hierzu wurde der speziell für diesen Zweck konstruierte Extruder (7) bestehend aus einem Gehäuse (2) und einer im Gehäuse (2) angeordneten Schnecke (4) gefertigt, wobei die das Gehäuse (2) des Extruders (7) unterteilt ist in eine
- Einzugszone (5) mit einer aktiven Kühlung (9), bei der das Gehäuse (2) als Trichter (22) ausgeführt ist und das Material aus einem Material mit guter Wärmeleitfähigkeit besteht. Die Schnecke (4) hat einen geringen Wellendurchmesser zur guten Materialaufnahme,
- Trennzone (6), bei der das Gehäuse (2) aus Material mit schlechter Wärmleitfähigkeit besteht und die gekühlte Einzugszone (5) thermisch von der beheizten Plastifizierungs- und Homogenisierung (8) trennt,
- Plastizifizierungs- und Homogenisierungszone (8),bei der das Gehäuse (2) aus einem Material mit guter Wärmeleitfähigkeit besteht und mit einer aktiven Heizung versehen ist und die Schnecke (4) hat einen größeren Wellendurchmesser als in den oberen Zonen (5,6) aufweist, wodurch die Plastifizierung gefördert und eine Kompression erreicht wird,
- Ausstoßzone (12) besteht aus wechselbaren Düse (3) aus einem abriebfesten Material (gehärteter Edelstahl),

Der Wellendurchmesser der Schnecke (4) ist konusförmig ausgebildet und steigt gleichmäßig von der Einzugszone (5) bis zum Ende der Plastizifizierungs- und Homogenisierungszone (8) an.

Die Extruder (7) sind mit einem mechanischen Antrieb (1) für das zu extrudierende Kompositmaterial, und das Gehäuse (2) ist über geeignete Mittel zum Transport des Kompositmaterials mit dem mechanischen Antrieb (1) verbunden, wobei der mechanische Antrieb (1) durch eine Stopfschnecke (17) gebildet wird. Die Stopfschnecke (17) als mechanischer Antrieb (1) ist mit dem Gehäuse (2) über eine Dosiereinheit (16) verbunden und mit einem kommerziellen Metall-Kunststoff-Kompositmaterial, bestehend aus POM als thermoplastischem Bindemittel und Edelstahl-Partikeln mit einem Anteil von 93% am Kompositmaterial bestückt. Das Material liegt beispielsweise als Granulat vor, welches für gewöhnlich im Pulverspritzguss als sogenannter Feedstock verwendet wird.

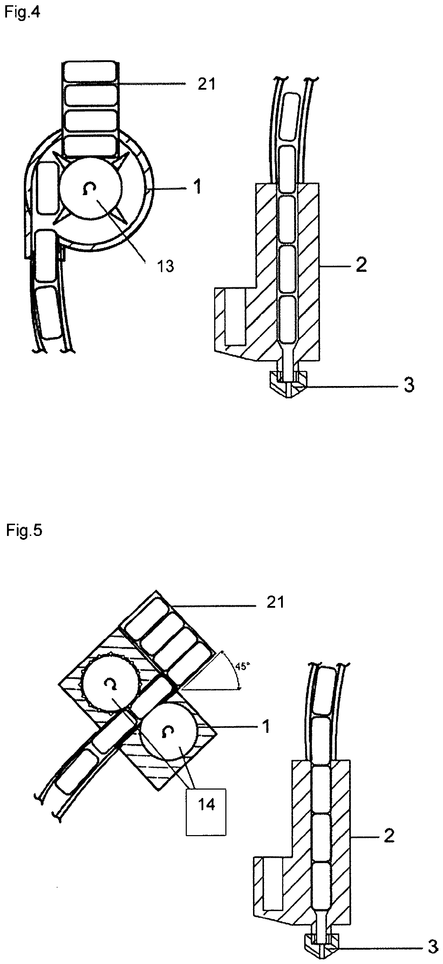

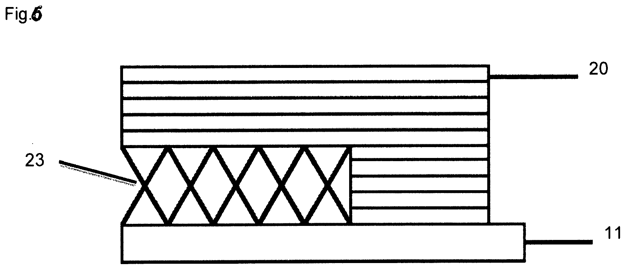

Die Antriebseinheit (1) kann aber auch, wie in Fig. 5 und 6 dargestellt, als Zellrad (13) oder als Antriebsräder (14) ausgebildet sein, wobei das Zellrad (13) oder die Antriebsräder (14) mit dem Gehäuse (2) verbunden sind.

In der aktiv gekühlten Einzugszone (5) wird das Granulat und das Gehäuse, das aus einem Material mit guter Wärmeleitfähigkeit, beispielsweise aus Aluminium besteht, gekühlt, um so eine größere Menge an Material dem Prozess zuführen zu können. Nach dieser Kühlung des Granulats erfolgt durch die Ausgestaltung der Trennzone (6) mit einem Material mit einer schlechten Wärmeleitfähigkeit, beispielsweise Keramik oder Kunststoff, eine thermische Trennung von der Plastifizierungs- und Homogenisierungszone (8). Die Formmasse wird verdichtet und die in dem Kompositmaterial eingeschlossene Luft heraus gedrückt. Jetzt entsteht innerhalb der Formmasse eine Reibungswärme, die unterstützt durch den beheizten Gehäuseteil der Plastifizierungs- und Homogenisierungszone (8) aus beispielsweise Aluminium die Formmasse in der Plastifizier- und Homogenisierungzone (8) in den plastischen Zustand übergehen lässt. Aus der Ausstoßzone (12) wird die geschmolzenen Formmasse in Fadenform über die Düse (3), gesteuert durch die Kinematik (18) auf die Bauplattform (11) aufgetragen.

Es wird eine optimale Temperatur von 200°C in der Homogenisierung- und Ausstoßzone (8) und eine Extrusionsgeschwindigkeit von umgerechnet 15 mm/s eingestellt. Der Extruder (7) wird senkrecht auf einer XYZ-Portalkinematik installiert und an die Steuerung eines 3D-Druckers angeschlossen. Über die Steuerung wurde dann auf die Bauplattform (11) eine zweidimensionale fadenförmige Struktur des Materials aufgetragen und ausgehärtet. Danach wurde der Extruder (7) in der Stärke der Schichtdicke (dz) in z- Achse nach oben verfahren und erneut die fadenförmige Materialstruktur über die Düse (3) des Extruders (7) auf die vorhandene Struktur auf der Bauplattform (11) aufgetragen und ausgehärtet. Dies wird so lange wiederholt bis das Bauteil als Grünteil (20) mit oder ohne Stützstruktur (23) vorliegt. Nach der Fertigstellung des Grünteils (20) wird es von der Bauplattform (11) entfernt und in einem Sinterofen (19) vom Bindemittel entbindert und durch weitere Erhitzung bilden die Metallpartikel an ihren Kontaktstellen sogenannte Sinterhälse. Das heißt, die Körner verschmelzen miteinander und gehen eine feste Bindung ein. Nach abgeschlossenem Sinterprozess kann das fertige Bauteil aus dem Ofen entnommen werden. Aufgrund des gelösten Bindemittels kann es zu einem definierten Volumenverlust des Bauteils kommen.

Die Grünteilfestigkeit entspricht dabei der des thermoplastischen Bindemittels und ist damit ausreichend, um das Bauteil unbeschadet von der Bauplattform zu entfernen. Da es sich bei dem Material, beispielsweise um ein Standardgranulat für den Pulverspritzguss handelt, ist die Machbarkeit der Nachbearbeitung des Grünteils mittels eines Sinterofens gewährleistet. Von diesem Punkt an unterscheidet sich das Verfahren faktisch nicht von dem Sinterprozess im Pulverspritzguss.

Die Erfindung ermöglicht es komplexe Bauteile aus hoch-festen keramischen oder metallischen Materialien zu erzeugen, z.B. Edelstahl, die eine Dichte von 98% des Vollmaterials entsprechen. Dabei ist das Verfahren um ein vielfaches günstiger als vergleichbare additive Fertigungsverfahren und hat ein deutlich besseres Verhältnis von Bauraum zu Anlagengröße. Durch die Möglichkeit interne Hohlstrukturen zu erzeugen, können völlig neue Konstruktionselemente im Bereich des Leichtbaus entwickelt werden, beispielsweise Teile mit geschlossenen Oberflächen und internen Waben- und Gitterstrukturen. Durch die niedrigen Kosten des Verfahrens werden diese Leichtbauteile günstiger und damit einer breiteren Anwendergruppe zugänglich gemacht. Bedingt durch die Tatsache, dass während des Druckprozesses (Phase 1) nur der thermoplastische Anteil des Kompositmaterials plastifiziert wird, liegt das Metall oder Keramikpulver zu keinem Zeitpunkt in ungebundener Form vor, wodurch die Gefahr einer Staubexplosion gebannt ist. Der Druckprozess kann aus diesem Grund in Umgebungsatmosphäre stattfindet und benötigt keine Schutzausrüstung. Die Anlagen zur Erzeugung der Bauteile in Phase 1 sind verhältnismäßig klein und besitzen eine robuste Mechanik, dadurch ist das Verfahren ebenfalls für den mobilen Einsatz geeignet. Der Schichtaufbau von thermoplastischem Material ist ebenfalls für die Schwerelosigkeit geeignet.

Diese Anlage kann nicht nur zur Verarbeitung von Kompositmaterialien zu Metallteilen, sondern auch für die kunststoffverabeitenden Verfahren, wie Extrusion, Spitzgießen u.ä. zur Herstellung freiformbarer Teile verwendet werden.

## Patentansprüche

1. Anlage zur additiven Fertigung von freiformbaren Metallteilen mit oder ohne Stützstruktur mittels eines Extrusionsverfahrens aus einem Metallpartikel enthaltenden Kompositmaterial, mit:
- einer Bauplattform (11),
- einer dreidimensional verfahrbaren Kinematik (18), und
- einem Extruder (7), der an der dreidimensional verfahrbaren Kinematik (18) angeordnet ist und einen mechanischen Antrieb (1) für das zu extrudierende Kompositmaterial umfasst,
wobei der Extruder (7) ein Gehäuse (2) und eine am Gehäuse (2) angeordnete, auswechselbare Düse (3) umfasst, und
wobei das Gehäuse (2) über geeignete Mittel zum Transport des Kompositmaterials mit dem mechanischen Antrieb (1) verbunden ist,
**dadurch gekennzeichnet, dass**
das Gehäuse (2) in eine Einzugszone (5), eine Trennzone (6), Plastifizierungs- und Homogenisierungszone (8) und eine Ausstoßzone (12) unterteilt ist, wobei
• die Einzugszone (5) mit einer aktiven Kühlung (9) für das Kompositmaterial versehen ist, und das Material des Gehäuses (2) in der Einzugszone (5) aus einem Material mit guter Wärmeleitfähigkeit besteht,
• die Trennzone (6) die gekühlte Einzugszone (5) thermisch von der beheizten Plastifizierungs- und Homogenisierungszone(8) trennt und in der Trennzone (6) das Gehäuse (2) aus einem Material mit schlechter Wärmleitfähigkeit besteht,
• die Plastizifizierungs- und Homogenisierungszone (8) mit einer aktiven Heizung (10) zur Plastifizierung des Kompositmaterials versehen ist und in der Plastizifizierungs- und Homogenisierungszone (8) das Gehäuse (2) aus einem Material mit guter Wärmeleitfähigkeit besteht
und
• die Ausstoßzone (12) auf eine Schmelztemperatur des Kompositmaterials eingestellt ist und aus einer auswechselbaren Düse (3) aus einem abriebfesten Material besteht, und über die Ausstoßzone (12) geschmolzene Formmasse in Fadenform zur additiven Fertigung eines Metallteils, gesteuert durch die Kinematik (18), auf die Bauteilplattform (11) auftragbar ist, wobei das Gehäuse (2) in der Einzugszone (5) als Trichter (22) ausgeführt ist und in dem Gehäuse (2) eine Schnecke (4) angeordnet ist, die in der Einzugszone (5) und der Trennzone (6) einen geringeren Wellendurchmesser aufweist als in der Plastizifizierungs- und Homogenisierungszone (8).

2. Anlage nach Anspruch 1, **dadurch gekennzeichnet, dass** der Wellendurchmesser der Schnecke (4) konusförmig ausgebildet ist und gleichmäßig von der Einzugszone (5) bis zum Ende der Plastifizier- und Homogenisierungszone (8) ansteigt.

3. Anlage nach Anspruch 1 und 2 **dadurch gekennzeichnet, dass** eine Welle der Schecke (4) in der Trennzone (6) aus einem Material mit einem schlechten Wärmeleitfähigkeit besteht.

4. Anlage nach Anspruch 1, **dadurch gekennzeichnet, dass** das Material des Gehäuses (2) der Einzugszone (5) und der Plastifizier- und Homogenisierungszone aus Aluminium besteht.

5. Anlage nach Anspruch 1, **dadurch gekennzeichnet, dass** das Material der Trennzone (6) des Gehäuses (2) aus einem wärmebeständigen Hochleistungskunstoff oder Keramik besteht.

6. Anlage nach Anspruch 5, **dadurch gekennzeichnet, dass** das Material der Trennzone (6) des Gehäuses (2) aus einem Polyetheretherketon oder aus Polysulfon besteht.

7. Anlage nach Anspruch 1, **dadurch gekennzeichnet, dass** am mechanischen Antrieb (1) für das zu extrudierende Kompositmaterial eine Überdruckleitung (15) oder eine Dosiereinrichtung (16) zur Bestückung mit in fester Form vorliegendem Kompositmaterial in Form von thermoplastischem Bindemittel und Metallpartikeln angeordnet sind.

8. Anlage nach Anspruch 7, **dadurch gekennzeichnet, dass** die Dosiereinrichtung (16) als eine Zellradschleuse ausgebildet ist.

9. Anlage nach Anspruch 1, **dadurch gekennzeichnet, dass** das geeignete Mittel zum Transport des Kompositmaterials vom mechanischen Antrieb (1) zum beheizten Gehäuse (2) als ein Schlauch ausgebildet ist.

10. Anlage Anspruch 1, **dadurch gekennzeichnet, dass** an der Kinematik ein oder mehrere Extruder angeordnet sind.

11. Anlage Anspruch 1, **dadurch gekennzeichnet, dass** der Extruder (7) für Kompositmaterial in Form von Granulat, grobkörnigem Pulver oder Sticks vorgesehen ist.

## Claims

1. A system for the additive manufacture of freely formable metal parts with or without a supporting structure by means of an extrusion method from a composite material comprising metal particles, comprising:
- a building platform (11),
- a three-dimensionally movable kinematic mechanism (18), and
- an extruder (7) which is arranged on the three-dimensionally movable kinematic mechanism (18) and comprises a mechanical drive (1) for the composite material to be extruded,
wherein the extruder (7) comprises a housing (2) and and an exchangeable die (3), arranged on the housing (2), and
Wherein the housing (2) is connected to the mechanical drive (1) by way of suitable means for transporting the composite material,
**characterized in that**
the housing (2) is divided into a feed zone (5), a separating zone (6), a plasticating and homogenizing zone (8) and a discharge zone (12), wherein
• the feed zone (5) is provided with active cooling (9) for the composite material, and the material of the housing (2) the feed zone (5) consists of a material with good thermal conductivity,
• the separating zone (6) separates the cooled feed zone (5) thermally from the heated plasticating and homogenizing zone (8) and in the separating zone (6) the housing (2) consists of a material with poor thermal conductivity,
• the plasticating and homogenizing zone (8) is provided with a active heating (10) for plasticating the composite material and in the REPLACEMENT SHEET (RULE 26) plasticating and homogenizing zone (8) the housing (2) consists of material with good thermal conductivity,
and
• the discharge zone (12) is adjusted to a melt temperature of the composite material and from an exchangeable die (3) of an abrasion-resistant material and from the discharge zone (12), the molten molding compound is applied in the form of a filament to the building platform (11) by way of the die (3), controlled by the kinematic mechanism (18), wherein
wherein the housing (2) is is designed as a funnel (22) and a screw (4) is arranged in the housing (2), wherein the shaft diameter of the screw (4) in the feed zone (5) and the separating zone (6) is lower than in the plasticating and homogenizing zone (8).

2. The system as claimed in claim 1, **characterized in that** the shaft diameter of the screw (4) is formed conically and increases uniformly from the feed zone (5) to the end of the plasticating and homogenizing zone (8).

3. The system as claimed in claims 1 and 2, **characterized in that** a shaft of the screw (4) consists in the separating zone (6) of a material with a poor thermal conductivity.

4. The system as claimed in claim 1, **characterized in that** the material of the housing (2) of the feed zone (5) and the plasticating and homogenizing zone consists of aluminum.

5. The system as claimed in claim 1, **characterized in that** the material of the separating zone (6) of the housing (2) consists of a heat-resistant high-performance plastic or ceramic.

6. The system) as claimed in claim 5, **characterized in that** the material of the separating zone (6) of the housing (2) consists of a polyetherether ketone or of polysulfone.

7. The system as claimed in claim 1, **characterized in that** a positive-pressure line (15) or metering line (16) for charging with composite material in solid form in the form of a thermoplastic binder and metal particles are arranged on the mechanical drive (1) for the composite material to be extruded.

8. The system as claimed in claim 7, **characterized in that** the metering device (16) is formed as a star wheel feeder.

9. The system as claimed in claim 1, **characterized in that** the suitable means for transporting the composite material from the mechanical drive (1) to the heated housing (2) is formed as a flexible tube.

10. The system as claimed in claim 1, **characterized in that** on the kinematic mechanism one or more or multiple extruders are arranged.

11. The system as claimed in claim 1, **characterized in that** the extruder (7) is provided for composite material in the form of granules, coarse-grained powder or sticks

## Revendications

1. Installation pour la fabrication additive de pièces métalliques malléables avec ou sans structure support au moyen d'un procédé d'extrusion d'un matériau composite contenant des particules métalliques, avec :
- une plateforme de construction (11),
- des moyens cinématiques (18) déplaçables dans les trois dimensions, et
- une extrudeuse (7) qui est agencée sur les moyens cinématiques (18) déplaçables dans les trois dimensions et comporte un entraînement (1) mécanique pour le matériau composite à extruder,
dans laquelle l'extrudeuse (7) comporte un boîtier (2) et une tuyère (3) interchangeable, agencée au niveau du boîtier (2), et
dans laquelle le boîtier (2) est relié à l'entraînement mécanique (1) par le biais de moyens appropriés pour le transport du matériau composite,
**caractérisée en ce que**
le boîtier (2) est divisé en une zone d'introduction (5), une zone de séparation (6), une zone de plastification et d'homogénéisation (8) et une zone d'expulsion (12), dans laquelle
-- la zone d'introduction (5) est pourvue d'un refroidissement actif (9) pour le matériau composite, et le matériau du boîtier (2) dans la zone d'introduction (5) se compose d'un matériau avec une bonne conductibilité thermique,
-- la zone de séparation (6) sépare la zone d'introduction (5) refroidie thermiquement de la zone de plastification et d'homogénéisation (8) chauffée et dans la zone de séparation (6) le boîtier (2) se compose d'un matériau avec une mauvaise conductibilité thermique,
-- la zone de plastification et d'homogénéisation (8) est pourvue d'un chauffage actif (10) pour la plastification du matériau composite et dans la zone de plastification et d'homogénéisation (8), le boîtier (2) se compose d'un matériau avec une bonne conductibilité thermique
et
-- la zone d'expulsion (12) est réglée à une température de fusion du matériau composite et se compose d'une tuyère (3) interchangeable en un matériau résistant à l'usure, et la masse formée fondue par le biais de la zone d'expulsion (12) peut être appliquée sous la forme d'un fil pour la fabrication additive d'une pièce métallique, commandée par les moyens cinématiques (18), sur la plateforme de composant (11), dans laquelle le boîtier (2) est réalisé dans la zone d'introduction (5) sous forme d'entonnoir (22) et une vis sans fin (4) est agencée dans le boîtier (2), laquelle présente dans la zone d'introduction (5) et la zone de séparation (6) un diamètre d'arbre inférieur à celui de la zone de plastification et d'homogénéisation (8).

2. Installation selon la revendication 1, **caractérisée en ce que** le diamètre d'arbre de la vis sans fin (4) est réalisé en forme de cône et augmente uniformément de la zone d'introduction (5) jusqu'à l'extrémité de la zone de plastification et d'homogénéisation (8).

3. Installation selon la revendication 1 ou 2, **caractérisée en ce qu'**un arbre de la vis sans fin (4) dans la zone de séparation (6) se compose d'un matériau avec une mauvaise conductibilité thermique.

4. Installation selon la revendication 1, **caractérisée en ce que** le matériau du boîtier (2) de la zone d'introduction (5) et de la zone de plastification et d'homogénéisation se compose d'aluminium.

5. Installation selon la revendication 1, **caractérisée en ce que** le matériau de la zone de séparation (6) du boîtier (2) se compose d'une matière plastique à haute performance ou céramique résistante à la chaleur.

6. Installation selon la revendication 5, **caractérisée en ce que** le matériau de la zone de séparation (6) du boîtier (2) se compose d'un polyétheréthercétone ou de polysulfone.

7. Installation selon la revendication 1, **caractérisée en ce qu'**une conduite de surpression (15) ou un dispositif de dosage (16) est agencé au niveau de l'entraînement (1) mécanique pour le matériau composite à extruder pour le garnissage avec le matériau composite se présentant sous la forme solide sous la forme d'un liant thermoplastique et de particules métalliques.

8. Installation selon la revendication 7, **caractérisée en ce que** le dispositif de dosage (16) est réalisé comme un sas à roue cellulaire.

9. Installation selon la revendication 1, **caractérisée en ce que** le moyen approprié pour le transport du matériau composite de l'entraînement mécanique (1) au boîtier (2) chauffé est réalisé comme un tuyau.

10. Installation selon la revendication 1, **caractérisée en ce qu'**une ou plusieurs extrudeuses sont agencées sur la cinématique.

11. Installation selon la revendication 1, **caractérisée en ce que** l'extrudeuse (7) est prévue pour le matériau composite sous la forme de granulat, poudre à gros grains ou bâtons.
